# EUROPEAN PATENT SPECIFICATION

(11) **EP 3 527 114 B1**
(45) Date of publication and mention of the grant of the patent: **17.11.2021**
(21) Application number: 18165333.8
(22) Date of filing: 30.03.2018
(51) Int. Cl.: A47J 27/62

(54) **A BEVERAGE PREPARATION DEVICE HAVING A LEVEL AND COOK SENSOR ELEMENT**
GETRÄNKEZUBEREITUNGSVORRICHTUNG MIT EINEM NIVEAU- UND KOCHSENSORELEMENT
DISPOSITIF DE PRÉPARATION DE BOISSON PRÉSENTANT UNE FONCTIONNALITÉ DE DÉTECTION DE CUISSON ET DE NIVEAU

(30) Priority: 20.02.2018 TR 201802400
(43) Date of publication of application: 21.08.2019
(73) Proprietor: PURTEK MACHINE INDUSTRY AND TRADE INC., Kagithane, Istanbul (TR)
(72) Inventor: ÖZGE, Ragip Okan, Kocaeli (TR)
(74) Representative: Sevinç, Erkan

(56) References cited:
- WO-A2-2008/155538
- WO-A2-2011/002421

## Description

### Relevant Art of the Invention

The present invention relates to a beverage preparation device with a level and cook sense feature, and more particularly, to a beverage preparation device wherein a sensor measures changes in resistance of a beverage in order to control a heating assembly.

### Background of the Invention

It is necessary to have a constant control on preparing of such beverages as Turkish coffee or milk that tend to overflow while being cooked. The same also applies to manual and automatic cooking devices. For example, while cooking a Turkish coffee, a lot of froth is formed as the boiling point is approached and said high amount of froth increases suddenly and strongly when boiling is started.

In cases of manual cooking by a user utilizing electrical or non-electrical products, the user must control the instant of overflow, and cooking must be terminated by the user when an overflow occurs. As for automatic products, beverage preparation devices may be mentioned wherein a heater can be controlled by means of a temperature sensor.

WO2008155538 (A2**)** relates to an electronic control apparatus for a liquid heating vessel. Said apparatus comprising: a user interface for receiving a user input; sensing means for sensing a condition relating to the vessel; switching means for switching a heating state of the vessel; and control means responsive to said user input and the sensing means to control the switching means. said apparatus further comprises a remote control device separate or separable from the vessel, said user interface being provided by said remote control device.

WO2011002421 (A2**)** relates to an automatic Turkish coffee machine which brews a coffee mixture for 1 to 4 persons and a new method for brewing Turkish Coffee. This device has an electrical heater and a temperature measurement mechanism that measures the temperature of the mixture. Under the control of the microprocessor circuit that it contains and the software included in that circuit, it brings the temperature of the coffee mixture close to the boiling point with a suitable rate, but does not boil up the mixture. Based on the temperature data acquired through measurement, it keeps the temperature a few 0C below the boiling point for a suitable period of time, and ensures that the coffee is brewed. The power and energy transferred to the mixture are also measured, and the power can be adjusted.

In the current state-of-art, it is known to use a level sensing element in systems such as water heaters. In a simple way sensors are known which are used to detect the presence of a liquid, wherein a cycle is complemented by the liquid, and such sensors are used in the water tanks of the beverage preparation devices in order to detect the level of water or presence of same. A detection of the level of liquids that leave residues by means of the method yields erroneous results due to the remaining residues. Particularly, it is not suitable to use such sensors in coffee pots with conductive walls, i.e. with a conductive body made of metal.

Sensing systems with conductive pins are tried in plastic wall reservoirs of the beverage preparation devices, with no success due to such problems as residues, electric arcs etc. even in coffee pots with insulating walls.

### Objects of the Invention

A main object of the invention is to provide a beverage preparation device capable of sensing the level of the liquid in all conductive or insulating reservoirs/coffee pots, even if there remain residues.

Another object of the present invention is to provide a beverage preparation device having a more precise cook sensing method with reduced cost, even in those pots made of conductive materials.

Another object of the present invention is to provide a beverage preparation device sensitive to the demands of the user, wherein the sensor can make a measurement even if it is in liquid.

### Brief Description of the Invention

According to claim 1 the present invention relates to a beverage preparation device comprising a reservoir and a handle enabling a user to hold the reservoir; a cooking volume surrounded and defined by a lateral wall of the reservoir and suitable for introducing therein a liquid mixture intended to form the beverage to be prepared; a heating assembly for heating the reservoir and the liquid mixture, when in use; an control circuit for controlling the heating assembly; and at least one sensor suitable for use in temperature control, the sensor being associated with the control circuit. The beverage preparation device comprises at least one sensor formed as a conductive pin contactable with the liquid mixture, said sensor disposed in the reservoir a ground connection area, a ground line of which is connected to the heating assembly for safety purposes, and which is in communication with the control circuit, or a conductive element positioned in such manner that it is in contact with the liquid mixture in the reservoir, when in use, and which is in communication with the control circuit; a control circuit capable of measuring a change in resistance of the liquid mixture by means of at least one sensor through the ground connection area, with which it is in communication in order to measure a change in temperature of the liquid mixture, or through the conductive element. Said control circuit is configured such that it calculates a corresponding temperature value via a predefined algorithm according to the measured resistance value of the liquid mixture, and cuts-off power supplied to the heating assembly or shuts it off, partially, when the desired temperature value is reached. In this manner, a beverage preparation device is achieved which is both precise and cheaper, wherein temperature is measured just based on a change in resistance. A system with an effective sensing system is obtained by measuring a change in resistance of the sensors having a conductive pin which used in the existing products just for detection of level.

In an alternative embodiment of the invention, said sensor comprises a conductive pin with a contact area to be contacted by the control circuit and located outside of the reservoir, and an insulating element made of an insulating material which surrounds the conductive pin, if a conductive reservoir is used, and is in contact with the lateral wall.

In an alternative embodiment of the invention, a plurality of sensor comprises an adjustment area that is in communication therewith.

In an alternative embodiment of the invention, said adjustment area comprises a graded adjustment element for selecting a desired one of a plurality of sensors based on the amount of the beverage to be prepared. The adjustment element and adjustment area are disposed on a handle so that the user may make a selection. Thus, the user may easily select to prepare a desired number of beverages just through the handle.

In an alternative embodiment of the invention, the control circuit that measures a change in resistance of the liquid mixture with the temperature rise comprises a number of operation modes having different resistance values depending on the type of the beverage to be prepared. There are a number of buttons that allow selecting the operation mode depending on the beverage to be prepared.

In an alternative embodiment of the invention, said handle has a lower handle section which will cover a number of sensors arranged on a lateral wall through an outer wall of the reservoir and which extends substantially in parallel to a longitudinal axis (x) of the reservoir.

In an alternative embodiment of the invention, said heating assembly comprises an upper heating plate that will contact with the liquid mixture to be heated and a heating assembly lateral wall surrounding the upper heating plate. The heating assembly may either be a resistance or film heater, or an induction heater may also be selected. Thus, an effective cooking method is achieved by selecting a type of heating suitable for different types of beverages.

In an alternative embodiment of the invention, the system comprises a control circuit which is suitable to operate in a fully automatic manner, on which all of the sensors operate simultaneously so that the user is not required to make a further selection, and to which measurements are transmitted through the ground connection area or conductive element, in addition to those between the sensors. Thus, a fully automatic system is achieved so that a system is obtained which is capable of making precise measurements without a user intervention.

In an alternative embodiment of the invention, said beverage preparation device comprises a base assembly to which it is connected via a connector and through which it is supplied with the necessary power. Thus, a beverage preparation device with a base assembly is obtained, and thanks to a lighter reservoir, the user may easily transfer the beverage prepared to the desired area.

In an alternative embodiment of the invention, said reservoir comprises a main body having a beverage preparation chamber, in which it may be placed, a water reservoir suitable for introducing water therein and which is associated with the main body, and a pump transferring the water into the cooking volume, when in use. In this way, a beverage preparation device is achieved which is easier to use by the user, wherein a water transfer into the main body is also automated.

In an alternative embodiment of the invention, there are a plurality of adjustment buttons on the main body which are suitable for selecting which sensor is to be operated depending on the desired number of persons. Thus, the user may easily select to prepare the desired number of beverages on the machine.

In an alternative embodiment of the invention, the heating assembly is positioned outside of the reservoir such that it is located on the bottom of the beverage preparation chamber and there is an adjustment area on the handle including a graded adjustment element which enables to select a desired one of a plurality of sensors. Thus, a lighter and more useful reservoir structure is achieved. The user may adjust the desired amount of beverage just through the handle on the reservoir.

In an alternative embodiment of the invention, the device comprises a control circuit which is suitable to operate in a fully automatic manner, on which all of the sensors operate simultaneously so that the user is not required to make a further selection, and to which measurements are transmitted through the ground connection area or conductive element, in addition to those between the sensors. In this way, a beverage preparation device is achieved which is fully automatic, precise and reliable, and without a need to make a selection.

### Brief Description of the Drawings

The beverage preparation device having a level and cook sensing method according to the present invention is illustrated in the accompanying drawings for better understanding, which drawings should not be used in interpretation of the claims without having regard to the description and should not be construed as limiting.
Figure 1 is a perspective view of a beverage preparation device according to the present invention.
Figure 2 is a sectional view of a beverage preparation device according to the present invention which has a single sensor, with the sensor being enlarged.
Figure 3 is a sectional view of a beverage preparation device according to the present invention which has a plurality of sensors, with the sensor being enlarged.
Figure 4 is a sectional view of the beverage preparation device according to the present invention having a single sensor, the inside of which is filled, approximately in half, with a liquid mixture used for preparing a beverage.
Figure 5a is a front perspective view of the beverage preparation device according to the present invention.
Figure 5b is a sectional view of D-D shown in Figure 5a.
Figure 5c is a sectional view of the beverage preparation device according to present invention with four sensors and a grounding area.
Figure 6a is a top perspective view of the beverage preparation device according to the present invention.
Figure 6b is a sectional view of A-A shown in Figure 6a.
Figure 7a is an exploded view of the beverage preparation device according to the present invention.
Figure 7b is an exploded view of an embodiment of the beverage preparation device according to the present invention, without an adjustment area available on the handle.
Figure 8a is a perspective view of an alternative embodiment of the beverage preparation device according to the present invention wherein it is located inside a main body with a water reservoir.
Figure 8b is a longitudinal sectional view of the beverage preparation device in Figure 8a.
Figure 8c is a longitudinal sectional view of the beverage preparation device in Figure 8a, which is taken from a different viewpoint.
Figure 9a is a front perspective view of the beverage preparation device according to the present invention, as shown being used with a base assembly.
Figure 9b is a rear perspective view of the beverage preparation device according to the present invention, as shown being used with a base assembly.
Figure 9c is a longitudinal sectional view of the beverage preparation device in Figure 9a.
Figure 9d is a top perspective view of the beverage preparation device according to the present invention, as shown being used with a base assembly.
Figure 10a is a longitudinal sectional view of an alternative embodiment of the beverage preparation device according to the present invention, showing an alternative use thereof as a kettle.
Figure 10b is a perspective view of the beverage preparation device in Figure 10a.
Figure 10c is a perspective view of the beverage preparation device in Figure 10a, taken from a different viewpoint.
Figure 11a is a sectional view of the beverage preparation device according to the present invention having a handle adjusted thereon (machined version) within the main body.
Figure 11b is a sectional view of the beverage preparation device according to the present invention having a handle not adjusted thereon (automatic) within the main body.
Figure 11c is a front sectional view of the beverage preparation device in Figure 11b.

### Detailed Description of the Invention

Electric charges may not only pass through solid substances, but also some solutions. Liquids through which an electric charge can pass are called electrolytes. Conveying of an electric charge in liquid conductors is performed by positive and negative atom groups formed in the liquid and called as ions. The higher is the amount of free ions in a liquid, the higher is the conductivity of the liquid. For example, pure water cannot conduct electric current since it does not contain free ions. However, tap water can conduct electric current since it contains a small amount of ions. In electrolytes, conductivity also depends on temperature. As the temperature is increased, the conductivity also increases. The beverage preparation device (10) of the present invention is preferably directed to prepare hot beverages such as Turkish coffee, which is prepared by adding water, ground coffee beans and preferably sugar. The ground coffee beans introduced into the water imparts conductivity to the water to some extent, and as the temperature of the mixture increases, its conductivity is also increased.

According to the present invention, in a preferred embodiment, the beverage preparation device (10) comprises a reservoir (30) having a cooking volume (38) therein and surrounded externally by a lateral wall (31), a handle (20) associated with the reservoir (30) and configured to allow the user to hold the reservoir, a heating assembly (50) for heating the liquid mixture (33) introduced into the cooking volume (38), at least one sensor (40) disposed on the lateral wall (31), which allows the system to sense the temperature and level by measuring a resistance difference through a ground connection area (37) to which it is associated or through an additional conductive connection on the reservoir (30), based on a change of temperature of the liquid mixture (33), and a control circuit for controlling operation of the sensor (40). The beverage preparation device (10) may be used in various types, such as with a base assembly (70), without a base assembly, and as a machine having a main body (60). There is also no restriction for the location where the control circuit is disposed. In order to achieve a more reliable product, it may be positioned inside the base assembly (70). Moreover, it may be located inside the reservoir (30) and inside the main body (60), in case of those structures with a main body (60). The control circuit is always configured to be connected to the sensors (40) having conductive pins (41). It is not necessary for the ground connection of the beverage preparation device (10) to be connected to the board. In case the device (10) is not connected to a grounded plug, the control circuit may have a ground outlet thereon.

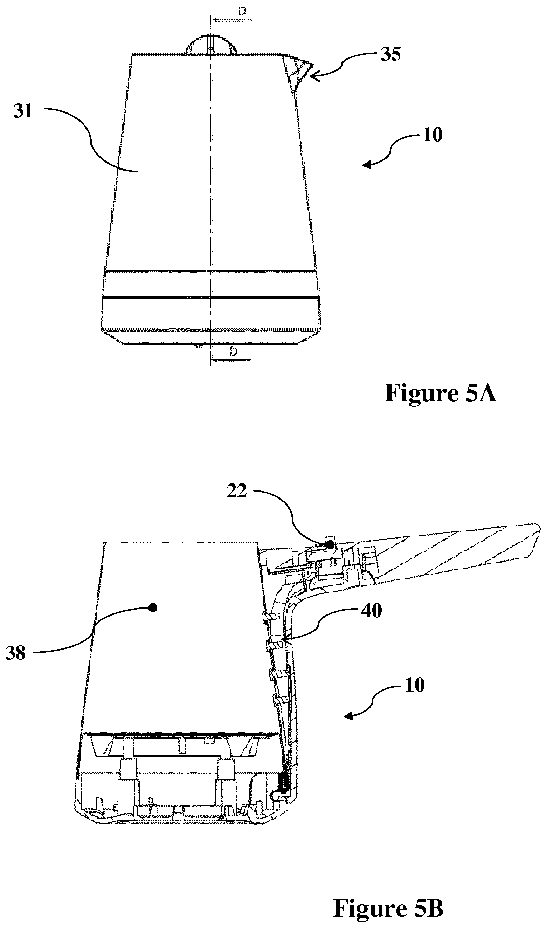

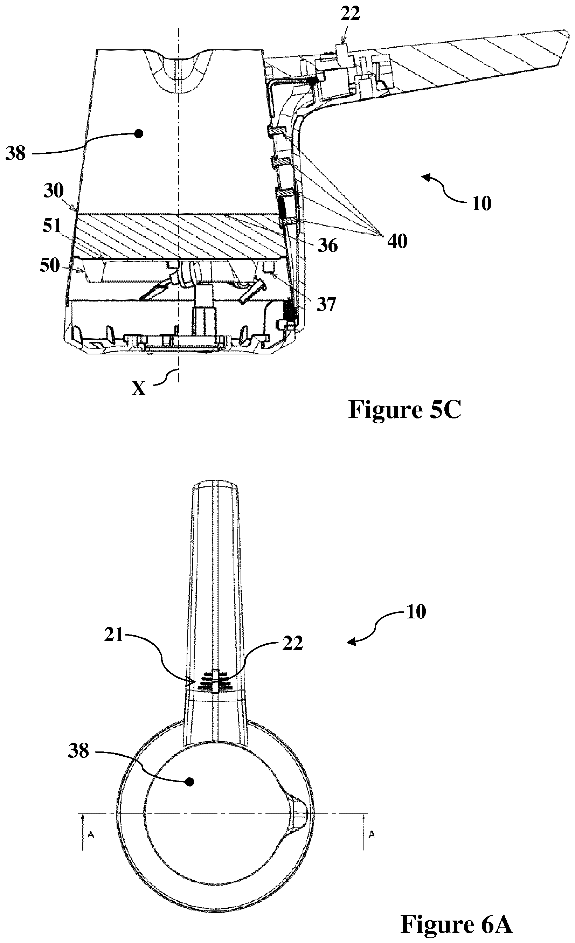

The control circuit is in communication with a contact area (43) on that end of the conductor pin (41) of each sensor which is located on the outside of the reservoir (30). The control circuit may also be in communication with a ground connection area (37), as can be seen in Figure 5c. Said sensor (40) senses existence of a ground connection via the heating assembly (50), the liquid mixture (33) introduced into the cooking volume (38) and the conductive pin. The characteristics and temperature of the liquid mixture (33) forming the beverage determine the conductivity; for example, conductivity of a mixture of coffee beans and water and that of the water have different values. In order to reach a predetermined conductivity level, the liquid mixture (33) should have a certain temperature. In this manner, it is not possible to prevent splashes in the reservoirs (30) made especially of conductive materials, or a detection of the sensor (40) in a negative manner since the contaminated reservoir (30) cannot reach predetermined values. For example, a contact with the conductor pin (41) once foam is formed on the coffee mixture is not sought alone; in addition to that, when a temperature value corresponding to the resulting resistance reaches to a predetermined value, cooking process within the reservoir (30) is terminated. Thus, the control circuit (electronic card) may control operation of the heating assembly (50) taking into account a change from the initial measured value and/or from the measurements taken.

It is also possible to use the control circuit including recorded values according to the different types of beverages. In a beverage preparation device (10) with a plurality of modes, for example, if the Turkish coffee mode is selected, a resistance value may be measured based on the respective resistance values, and when a selection is made based on a predetermined different beverage, different resistance values defined on the control circuit will also be effective. For instance, a beverage preparation device (10) may be implemented which has only a water boiling and coffee cooking method. If a coffee cooking mode is selected, an algorithm will be processed corresponding to resistance values suitable for the liquid mixture (33) that will form the coffee.

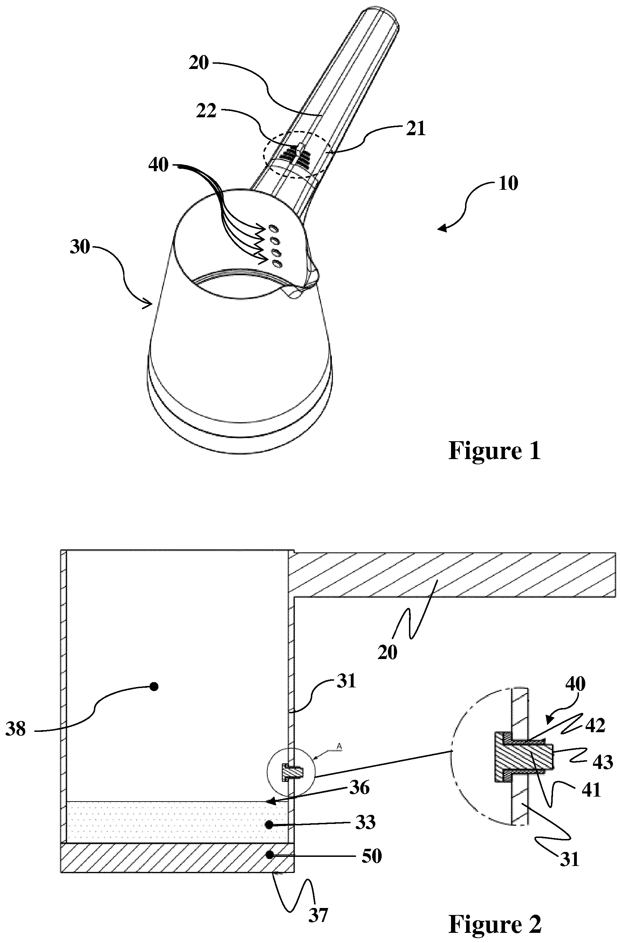

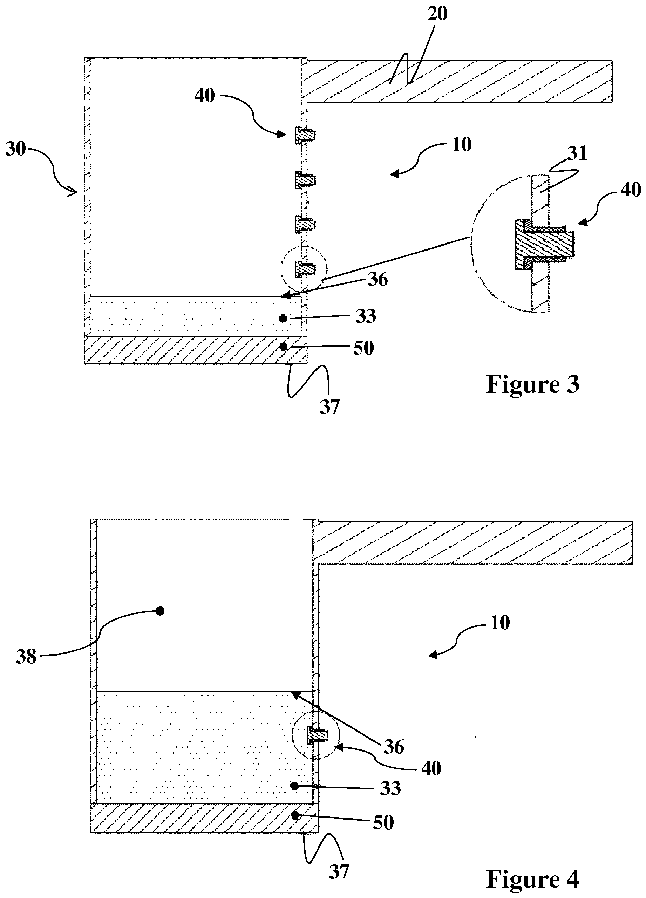

As seen in Figure 2, in a preferred embodiment of the invention, only one sensor (40) may be located on the lateral wall (31), or a plurality of, preferably three or four sensors (40) may be located on the lateral wall (31) in an array and on a longitudinal axis (x), as shown in Figure 3. Each sensor (40) preferably has a conductive pin (41) configured to contact with the liquid mixture (33) introduced into the cooking volume (38), an insulating element (42) surrounding the conductive pin (41) in case a conductive lateral wall is used, and a contact area (43) suitable for contacting with the control circuit constructed on an end of the conductive pin (41). Said reservoir (30) may be selected from a conductive or insulating material, and one or more conductive pins (41) are arranged on the lateral wall (31) at a predetermined level(s) so as to make detection.

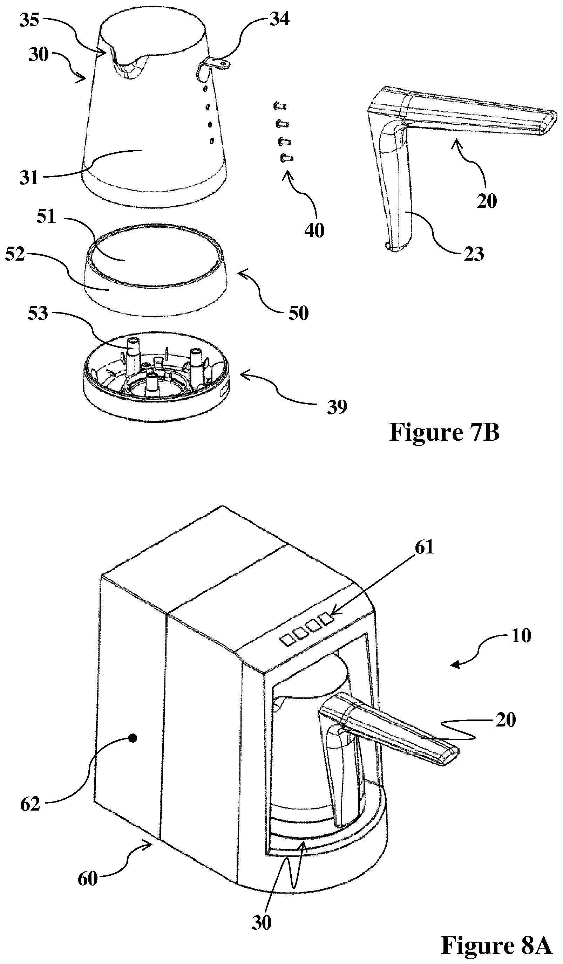

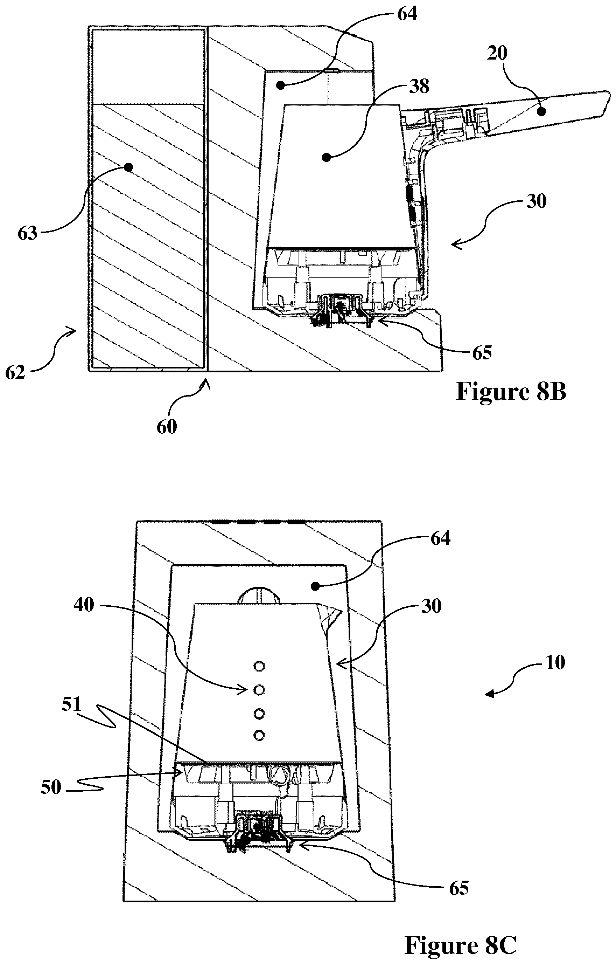

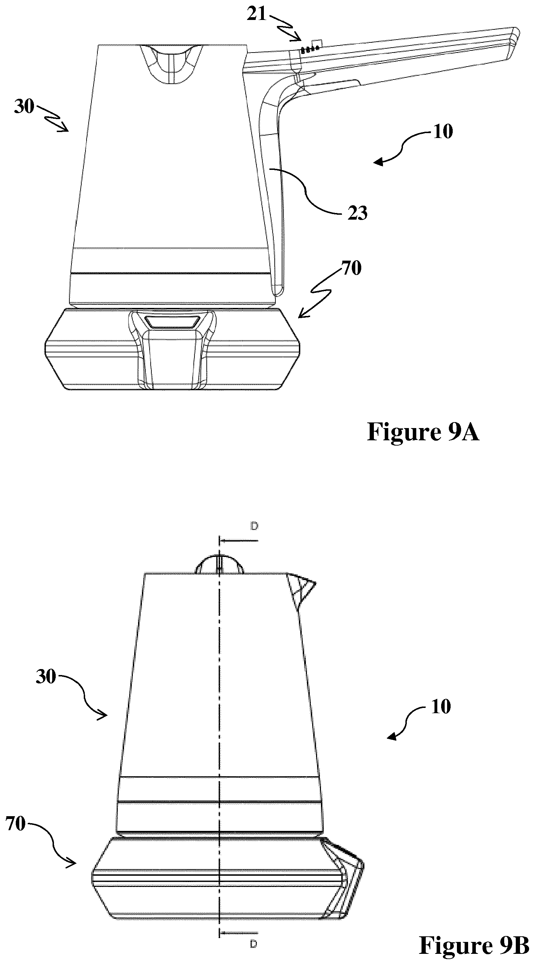

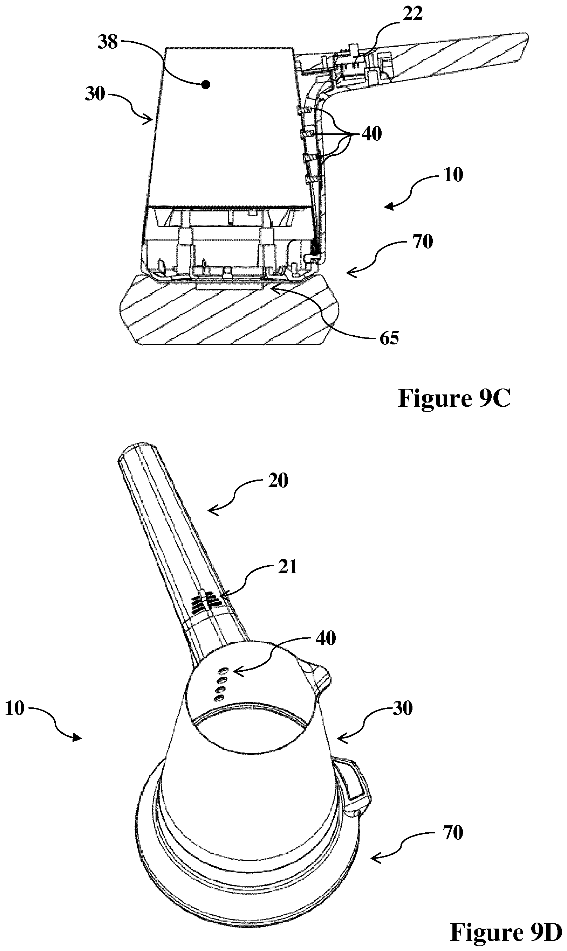

Such detection is carried out taking into account a value between the conductive pin (41) of the sensor (40) and the grounding and/or between two sensors (40). Figures 9A-D illustrate different views of the beverage preparation device (10), as disposed on the base assembly (70). The reservoir (30) is in communication with a connector (65) on the base assembly (70), and receives the required power through the connector (65) on the base assembly (70). Another use of the invention is provided in Figures 8A-C. In the embodiment of the beverage preparation device (10), a beverage preparation chamber (64) is formed in a main body (60). The beverage preparation chamber (64) is constructed and sized to dispose the reservoir (30) therein. The beverage preparation device (10) with a main body (60), as shown in section in Figure 8b, is associated via a connector (65) located on the bottom of the beverage preparation chamber (64). There is a water reservoir (62) associated with the main body or integral therewith, and water (63) available in the water reservoir (62) is transferred into the cooking volume (38) of the reservoir (30) by means of a pump and depending on a selection on a plurality of adjustment buttons (61) also provided on the main body (60). Said adjustment button (61) is in communication with the control circuit, ensuring to transfer the water based on a selection, and also ensuring the respective sensor (40) to operate based on the selection.

The reservoir (30) may either be connected with the connector (65) on the base assembly (70), or may be connected as in the main body (60) structure. The main body (60) or the base assembly (70) connected with a connector (65), through which the beverage preparation device (10) is supplied with the necessary power to operate, uses a ground connection to be connected to a heating assembly (50) for safety purposes. A level of conductivity generated between the ground and the sensor (40) having a conductor pin (41) is measured by a processor on the control circuit. In the heating systems that do not require a ground connection, the system may be operated in a similar manner using an additional conducive element. For instance, in cases where an induction heating is conducted, there is no need for a ground connection, in which case a conductive element may be used which is disposed so as to contact with the liquid mixture (33) in the reservoir (30), when in use, and which is in communication with the control circuit. The control circuit that is in communication with the liquid mixture (30) through the conductive element measures a change in resistance of the liquid mixture (33) against the temperature, by means of the sensor (40) with which it is also in communication, and calculates a temperature value corresponding to the resistance value by means of an algorithm thereof, thereby halting or pausing the heating assembly (50) based on the desired value (predefined in the system).

Based on the operation principle of the system, predetermined conductivity values are defined in the control circuit, so that a change in resistance of the liquid mixture (33) introduced into the cooking volume (38) with the temperature rise, and formation of foam enable to make a level and cook detection. For example, there is a difference in conductivity values of the potable water and that of the coffee-added water. Furthermore, as the coffee mixture is cooked, its conductivity level is increased. The desired value is generated from the tests and experiments conducted. This value may be programmed based on the liquid mixture to be cooked.

For example, after the Turkish coffee, preferably sugar and water are introduced into the cooking volume (38) of the main body (60), they are stirred, as a result of which there remain residue on the sensor or sensors (40) on the main body (10), thereby ensuring conductivity between the conductive reservoir (30), the heating assembly (50) and the conductive pins (41). However, said conductivity value is smaller than that of the coffee mixture or that of the foam to be formed upon cooking. Thus, even if the sensor (40) is situated under or above a level where the liquid mixture (33), preferably coffee mixture is located, it is possible to make cook detection at the desired quality.

If the conductive pin (41) is situated in the liquid mixture (33), as shown in Figure 4, as the coffee mixture is heated, its conductivity increases, and when it reaches to the desired value, the control circuit to which it is connected by means of the contact area (43) having a connection section terminates the cooking process and cuts off the power supplied to the resistance. If the conductive pin (41) is situated at a higher level than the liquid mixture (33), as shown in Figure 2, the liquid mixture (33) foams and the resulting foam touches the conductive pin (41) of the sensor (40), and if the resulting foam is the conventional hot foam formed after the boiling process, the conductivity value falls down with the temperature rise, and if it reaches to a predetermined temperature value at the point where it contacts with the conductive pin (41), cooking process is terminated by the control circuit and power supplied to the heating assembly (50) is cut off.

In an embodiment of the invention, for example as may be seen in Figures 1, 5b, 5c and 7a, there is an adjustment area (21) on the handle (20). An adjustment element (22) provided on the adjustment area (21) may select sensors (40) in the reservoir (30). The adjustment element (22), preferably serving as a four-stage switch, may allow selecting sensors (40) disposed in an array, for example four in an array, in a desired manner so as to operate the system accordingly. The adjustment element (22) that may be selected to have four stages may vary depending on an increase in sensors (40). Thus, a beverage preparation device (10) may be achieved wherein the desired sensor (40) may be selected and which is relatively more cost-effective. In another embodiment of the invention, all of the sensors (40) may be connected to the control circuit, so that a fully automatic structure may be achieved. Said sensors (40) may either be positioned on the lateral wall (31) at the same distance, or may be positioned at different distances and positions. In another embodiment of the invention, it is possible for the control circuit to evaluate the values measured by the two sensors (40). One of the advantages of the invention is that the beverage preparation device (10) may be controlled by means of a single sensor (40), without a need to take into account two different sensors (40).

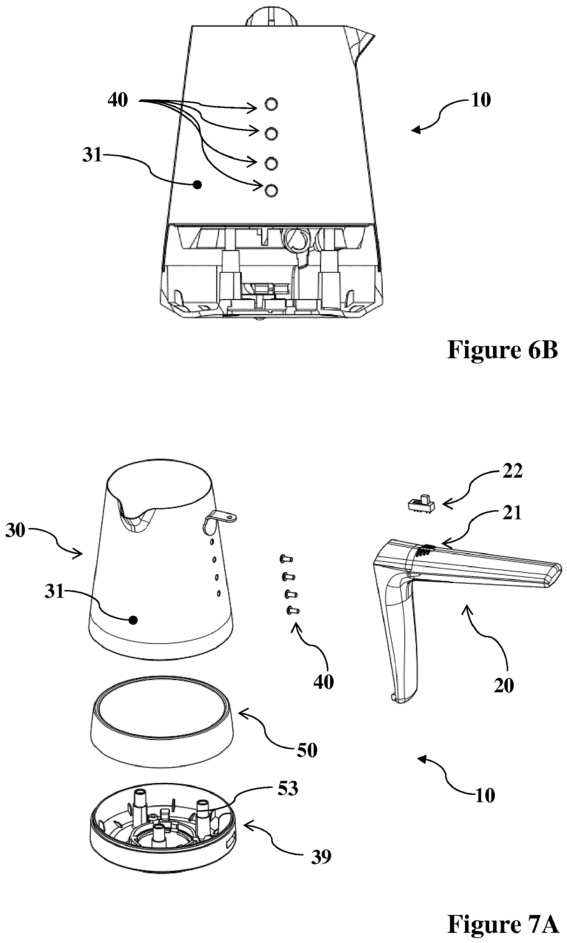

Said handle (20) may project from the reservoir (30) as a shank, as may be seen in Figures 1 to 9D. In another embodiment of the invention, it is possible to have an adjustment area (21) and an adjustment element (22) on the handle (20). With reference to Figure 7b, the handle (20) comprises a lower handle section (23) such that it externally covers the sensors (40) arranged on a reservoir lateral wall (31) so as to have a "L" form. The lower handle section may either be integral with the handle (20) or may be configured as a separate element. Again with reference to Figure 7B, a bracket (34) having a hole thereon may be located on the reservoir (30) so as to connect the handle (20). With the bracket (34), the handle (20) is associated with the reservoir (30). The lower handle section (23) is also sized to cover connection wires extending from the adjustment area (21) to the sensor (40). In those models having a main body, a similar function of the graded adjustment element (22) of the adjustment area (20) is performed by an adjustment button (61) which is assigned a task for each stage.

In that case, the user will not be required to make a selection. In a beverage preparation device (10) wherein preferably four sensors (40) are used and an adjustment is performed by means of the graded adjustment element (22) on the handle (20), the user may make a selection based on the desired amount of the beverage. For example, if the user desires to prepare beverage for two persons, he selects a stage corresponding to two persons on the graded adjustment element (22), and accordingly the control circuit will only receive data from the selected sensor so that it will make an evaluation based on the data from a single sensor (40).

As shown in Figure 7b, it is possible to use a beverage preparation device (10) having no adjustment area (21). In such configuration, in case all sensors (40) are connected to the control circuit, the control circuit detects where the level of the liquid mixture (33) is, based on whichever sensor (40) is being contacted, and thus there will be no need for a selection switch such as an adjustment element (21).

In all alternative embodiments of the invention, a change in resistance of the liquid mixture (33) introduced into the reservoir (30) against the temperature is measured by means of at least one sensor (40) associated with the conductive element or the ground connection area (37) situated on the lateral wall (31) of the reservoir (30) or on the ground, and cooking process is terminated by interrupting or halting the heating process of the heating assembly (50) based on the values measured by the control circuit. As a liquid mixture (33), it is for example convenient to introduce components constituting a Turkish coffee. It is possible to add Turkish coffee, water and sugar, or if it is desired to prepare a different beverage, different materials may be added, in which case there will be a change in the values measured. In a beverage preparation device (10) designed for cooking Turkish coffee, a value of the resistance to be generated when the desired temperature value is obtained based on the materials added therein, is defined in the control circuit. When the desired value is reached, the control circuit may reduce power supplied to the heating assembly (50) either in a fast manner or at certain intervals. As a heating assembly (50), it is possible to select a resistance, or different heating elements may be selected.

With reference to Figure 7b, it may comprise an upper heating plate (51), a bottom section (39) of which will be in communication with the liquid mixture (33), and a heating assembly (50) lateral wall surrounding the upper heating plate (51). The heating assembly (50) which is suitable to be positioned on the bottom section (39) of the reservoir (30) may also be supported by at least one supporting lug (53) on the bottom section (39). An end of a number of the supporting lugs (53) is in communication with the heating assembly (50), which lugs being arranged in the bottom section (39), preferably being three.

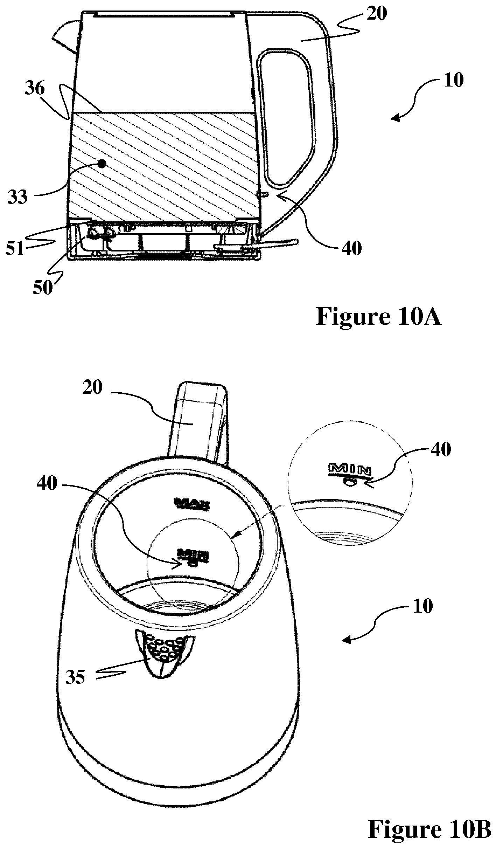

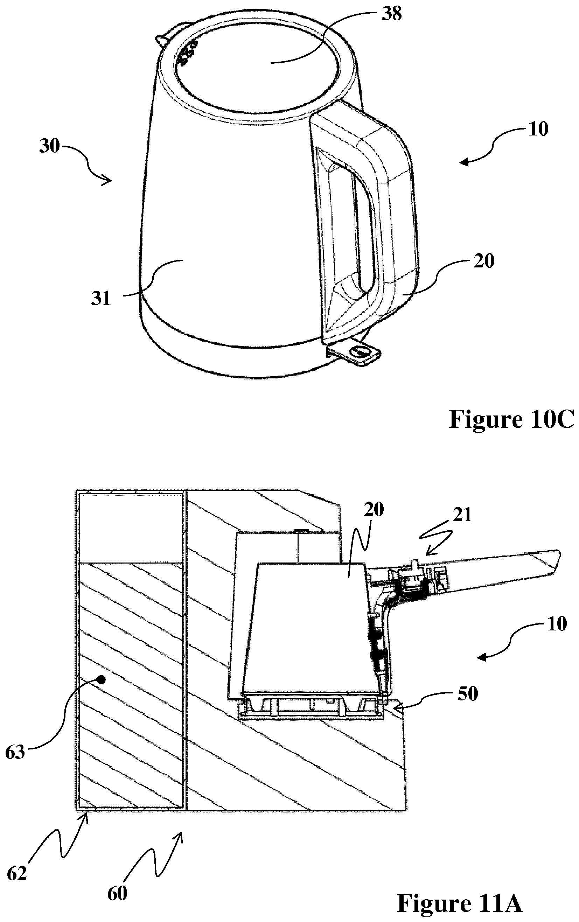

In an embodiment of the invention, the liquid mixture (33) is introduced into the reservoir (30) such that it is located under the sensor (40), and the foam of the coffee to be formed may be controlled. Since the heated coffee components have a liquid phase, its temperature increases slowly, but the temperature of the foam increases suddenly at the time of foaming formed on the upper surface (36) of the liquid mixture. In this way, thanks to a measurement of the foam, it may be more precise to obtain foam expected from an ideal Turkish coffee. Figures 10A-C illustrate another alternative embodiment of the invention. The beverage preparation device (10) may serve as a water heater such as a kettle. In this embodiment, as in the devices performing such actions as boiling of water or keeping the water at the desired temperature, the sensor (40) described in the invention may also associated with a lateral wall (31) of the reservoir (30) or at the bottom thereof. The sensor (40) is connected with the ground connection area via the contact area (43), and based on the temperature value corresponding to the resistance level defined in the control circuit, a change in the conductivity (resistance) of the liquid with the temperature rise is measured and controlled. The beverage preparation device (10) of the invention may be a coffee machine or a water heater.

The beverage preparation device (10) of the invention may make measurements just by means of a conductive element and a ground connection, and may control the heating assembly (50) through the control circuit. The sensor (40) of the invention consists of a conductive pin (41), so that it is possible to make a measurement using less materials and without a need for complex sensor structures. By increasing the number of the sensors (40), a more precise cook and foam detection may be performed based on the levels of the liquid mixture (33).

The conductive pin (41) of the sensor (40) may be located on the lateral wall (31) such that it contacts with the liquid or the foam formed if a beverage suitable for foaming is to be prepared such as a coffee or the like. In alternative embodiments of the invention, sensor (40) may be located on the bottom of the reservoir (30).

In a beverage preparation device (10) intended for beverages suitable for foaming such as a coffee or the like, sensor(s) (40) are positioned above the liquid mixture (33), to some extent, in order to contact with the foam. This is to obtain ideal beverage foam in a more precise manner, rather than cooking.

As for the water heater configuration in an alternative embodiment of the invention as shown in Figures 10A-C, said sensor(s) (40) are placed in the reservoir (30) so as to first contact with it based on the amount of the water (62) to be added.

Although in the invention a resistance between the ground connection and the sensor (40) is taken into account, it is not necessary to have a ground connection in the beverage preparation device (10), and a pin connection may also be used as an additional feature. In resistance or film heaters that are likely to be available in the heating assembly (50) of the beverage preparation device (10), it is necessary to connect a ground connection on the metal heating section for safety purposes. Using this as an advantage, said beverage preparation device (10) makes a resistance measurement between the sensor (40) having at least one conductive pin (41) and the ground connection. For example, in case of using induction heaters, no ground connection may be connected to the reservoir (30) through the heating assembly (50). In this case, a ground connection that cannot be used to operate the beverage preparation device (10) may be connected to any conductors to be contacted with the liquid mixture (33) in the cooking volume (38) by means of the control circuit. It may preferably be connected to the lowermost point of the reservoir (30) because of the fact that it should, in each case, be in contact with the liquid mixture (33). That is, the control circuit will also be in communication with a conductive part that is in contact with the liquid. It is possible to include a conductive element that will be in contact with the liquid mixture (33) or water (63), or if a reservoir (30) made of a conductive material is used, it may be connected to anywhere of the conductive reservoir (30).

According to alternative embodiments of the invention (Figures 9a-d), a use of the reservoir (30) and the base assembly (70) may be such that at least one sensor (40) and a ground connection or a plurality of sensors (40) and a ground connection are available. More particularly, a desired one of a plurality of sensors (40) may be selected through the adjustment area (22) or all the sensors (40) may be connected to the control circuit.

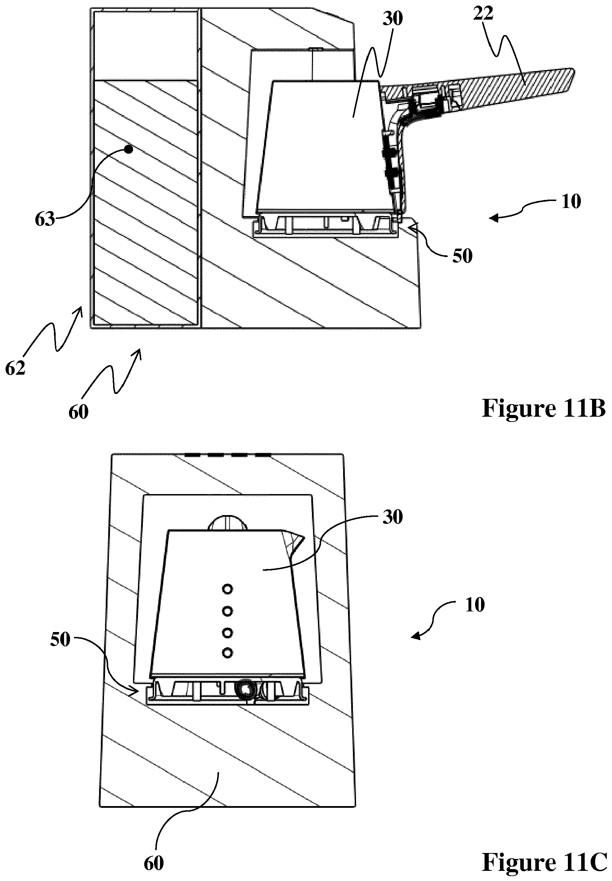

In alternative embodiments having a main body (60) wherein the heating assembly (resistance or film heater) is located inside the reservoir (30), at least one sensor (40) and ground connection may be used, as shown in Figures 8a-c. It is possible to use two sensors (40) without a ground (earth) connection. In alternative embodiments with a main body (60), there is an adjustment area (21) on the handle (20), as described above, and operation of a desired one of the sensors (40) may be selected through the adjustment area (21). Similarly, in structures without a ground connection, a conductive element may be used which is in communication with the liquid mixture (33) and connected to the control circuit. In such structures with a main body and without a ground connection, it is possible to select to establish a connection of a single sensor (40) to the control circuit, or all sensors (40) may be used as connected to the board. In Figures 11A-C, it is possible to maintain said heating assembly (50) external to the reservoir (30), and to dispose it in the main body (60), especially on the bottom of the beverage preparation device (64). Also in the beverage preparation devices with a main body (60) and the heating assembly (50) being located in the main body, as shown in Figures 11A-C, the control circuit may select a single sensor (40) through the adjustment area (21), or an automatic configuration may be possible wherein all the sensors (40) are connected to the control circuit. As shown in Figures 10A-C, the beverage preparation device (10) used as a water heater (kettle) may be constructed using at least one sensor (40) and ground connection. Likewise, it is possible to use at least two pins. Each reservoir (30) used in the invention may comprise a mouth (35) and a perforated filter element downstream of the mount so as to ensure that the liquid therein is poured in an easy manner.

The sensor (40) used in the invention may be constructed using especially the conductivity feature of a conductive pin (41). It is also possible to use only the conductive pin (41) as a sensor (40). The beverage preparation device may be constructed as a coffee machine, milk frother or water heater (kettle).

### List of references:

- 10.: Beverage preparation device
- 20.: Handle
- 21.: Adjustment area
- 22.: Adjustment element
- 23.: Lower handle section
- 30.: Reservoir
- 31.: Lateral wall
- 33.: Liquid mixture
- 34.: Bracket
- 35.: Mouth
- 36.: Upper surface of the liquid mixture
- 37.: Ground connection area
- 38.: Cooking volume
- 39.: Bottom section
- 40.: Sensor
- 41.: Conductive pin
- 42.: Insulating element
- 43.: Contact area
- 50.: Heating assembly
- 51.: Upper heating plate
- 52.: Heating assembly lateral wall
- 53.: Supporting lug
- 60.: Main body
- 61.: Adjustment button
- 62.: Water reservoir
- 63.: Water
- 64.: Beverage preparation chamber
- 65.: Connector
- 70.: Base assembly
- X: Longitudinal axis of the reservoir

## Claims

1. A beverage preparation device (10) comprising: a reservoir (30) and a handle (20) enabling a user to hold the reservoir (30);
a cooking volume (38) surrounded and defined by a lateral wall (31) of the reservoir (30) and suitable for introducing therein a liquid mixture (33) intended to form the beverage to be prepared;
a heating assembly (50) for heating the reservoir (30) and the liquid mixture (33), when in use;
an control circuit for controlling the heating assembly (50); and
at least one sensor (40) for use in temperature control, the sensor being associated with the control circuit, **characterized in that** said beverage preparation device (10) further comprises:
at least one sensor (40) formed as a conductive pin (41) contactable with the liquid mixture (33), said sensor disposed in the reservoir (30);
a ground connection area (37), a ground line of which is connected to the heating assembly (50) for safety purposes, and which is in communication with the control circuit, or a conductive element positioned in such manner that it is in contact with the liquid mixture (33) in the reservoir (30), when in use, and which is in communication with the control circuit;
the control circuit capable of measuring a change in resistance of the liquid mixture (33) by means of at least one sensor (40) through the ground connection area (37), with which it is in communication in order to measure a change in the temperature of the liquid mixture, or through the conductive element and **in that**
said control circuit is configured such that it, in use, calculates a corresponding temperature value via a predefined algorithm according to the measured resistance value of the liquid mixture (33), and cuts-off power supplied to the heating assembly (50) or shuts it off, partially, when the desired temperature value is reached.

2. A beverage preparation device (10) according to claim 1, **characterized in that** said sensor (40) comprises a conductive pin (41) with a contact area (43) to be contacted by the control circuit and located outside of the reservoir (30), and an insulating element (42) made of an insulating material which surrounds the conductive pin (41), if a conductive reservoir (30) is used, and is in contact with the lateral wall (31).

3. A beverage preparation device (10) according to claim 1 or 2, **characterized by** a plurality of sensors (40), each sensor (40) comprising an adjustment area (21) for communication therein.

4. A beverage preparation device (10) according to claim 3, **characterized in that** said adjustment area (21) comprises a graded adjustment element (22) for selecting one of a plurality of sensors (40) based on the amount of the beverage to be prepared.

5. A beverage preparation device (10) according to claim 4, **characterized in that** said adjustment element (22) and adjustment area (21) are disposed on a handle (20) so that the user can make a selection.

6. A beverage preparation device (10) according to any one of the preceding claims, **characterized in that** the control circuit that being arranged to measure a change in resistance of the liquid mixture (33) with the temperature rise comprises a number of operation modes having different resistance values depending on the type of the beverage to be prepared.

7. A beverage preparation device (10) according to claim 6, **characterized in that** said beverage preparation device (10) comprises a number of buttons that allow to select the operation mode depending on the beverage to be prepared.

8. A beverage preparation device (10) according to any one of the preceding claims, **characterized in that** said handle (20) has a lower handle section (23) which is arranged to cover a number of sensors (40) arranged on a lateral wall (31) through an outer wall of the reservoir (30) and which is arranged to extend substantially in parallel to a longitudinal axis (x) of the reservoir.

9. A beverage preparation device (10) according to any one of the preceding claims, **characterized in that** said heating assembly comprises an upper heating plate (51) arranged to contact with the liquid mixture (33) to be heated and a heating assembly lateral wall (52) surrounding the upper heating plate (51).

10. A beverage preparation device (10) according to any one of the preceding claims, **characterized by** comprising an control circuit which is suitable to operate in a fully automatic manner, on which all of the sensors (40) operate simultaneously so that the user is not required to make a further selection, and to which measurements are transmitted through the ground connection area (37) or conductive element, in addition to those between the sensors (40).

11. A beverage preparation device (10) according to any one of the preceding claims, **characterized in that** said beverage preparation device (10) comprises a base assembly (70) to which it is connected via a connector (65) and through which it is supplied with the necessary power.

12. A beverage preparation device (10) according to claims 1 to 10, **characterized in that** said reservoir (30) comprises a main body (60) having a beverage preparation chamber (64) in which it may be placed, a water reservoir (62) for introducing water (63) therein and which is associated with the main body (60), and a pump transferring the water (63) into the cooking volume (38), when in use.

13. A beverage preparation device (10) according to claim 12, **characterized by** comprising a plurality of adjustment buttons (61) on the main body (60) which are suitable for selecting which sensor (40) is to be operated depending on the desired number of persons.

14. A beverage preparation device (10) according to claim 12, **characterized in that** said heating assembly (50) is positioned outside of the reservoir (30) such that it is located on the bottom of the beverage preparation chamber (64) and comprises an adjustment area (21) on the handle (20) including a graded adjustment element (22) which enables to select a desired one of a plurality of sensors (40).

15. A beverage preparation device (10) according to claim 12, **characterized by** comprising an control circuit which is suitable to operate in a fully automatic manner, on which all of the sensors (40) operate simultaneously so that the user is not required to make a further selection, and to which measurements are transmitted through the ground connection area (37) or conductive element, in addition to those between the sensors (40).

## Patentansprüche

1. Getränkezubereitungsvorrichtung (10), aufweisend: ein Reservoir (30) und einen Handgriff (20), der es einem Nutzer ermöglicht, das Reservoir (30) zu halten;
ein Kochvolumen (38), das von einer seitlichen Wand (31) des Reservoirs (30) umgeben und definiert und zum Einführen eines flüssigen Gemisches (33) geeignet ist, das dazu bestimmt ist, das zuzubereitende Getränk zu bilden;
eine Erwärmungsanordnung (50) zum Erwärmen des Reservoirs (30) und des flüssigen Gemisches (33) im Gebrauch;
eine Steuerschaltung zum Steuern der Erwärmungsanordnung (50); und zumindest einen Sensor (40) zur Verwendung in Temperatursteuerung, wobei der Sensor mit der Steuerschaltung verknüpft ist, **dadurch gekennzeichnet, dass** die Getränkezubereitungsvorrichtung (10) weiterhin aufweist:
zumindest einen Sensor (40), der als ein leitfähiger Stift (41) gebildet ist, der mit dem flüssigen Gemisch (33) in Berührung bringbar ist, wobei der Sensor in dem Reservoir (30) angeordnet ist;
einen Erdverbindungsbereich (37), von dem eine Erdleitung mit der Erwärmungsanordnung (50) für Sicherheitszwecke verbunden ist, und der in Kommunikation mit der Steuerschaltung steht, oder ein leitfähiges Element, das derart positioniert ist, dass es im Gebrauch in Berührung mit dem flüssigen Gemisch (33) in dem Reservoir (30) steht, und das in Kommunikation mit der Steuerschaltung steht;
wobei die Steuerschaltung in der Lage ist, eine Änderung des Widerstands des flüssigen Gemisches (33) mittels zumindest eines Sensors (40) durch den Erdverbindungsbereich (37) zu messen, mit dem er in Kommunikation steht, um eine Änderung der Temperatur des flüssigen Gemisches zu messen, oder durch das leitfähige Element, und dass
die Steuerschaltung so ausgebildet ist, dass sie im Gebrauch einen entsprechenden Temperaturwert über einen vordefinierten Algorithmus gemäß dem gemessenen Widerstandswert des flüssigen Gemisches (33) berechnet, und Energie, die der Erwärmungsanordnung (50) zugeführt wird, wegnimmt oder sie teilweise abstellt, wenn der gewünschte Temperaturwert erreicht ist.

2. Getränkezubereitungsvorrichtung (10) nach Anspruch 1, **dadurch gekennzeichnet, dass** der Sensor (40) einen leitfähigen Stift (41) mit einem Kontaktbereich (43), der von der Steuerschaltung zu kontaktieren ist und sich außerhalb des Reservoirs (30) befindet, und ein isolierendes Element (42) aufweist, das aus einem isolierenden Material gefertigt ist, das den leitfähigen Stift (41) umgibt, wenn ein leitfähiges Reservoir (30) benutzt wird, und mit der seitlichen Wand (31) in Berührung steht.

3. Getränkezubereitungsvorrichtung (10) nach Anspruch 1 oder 2, **gekennzeichnet durch** eine Mehrzahl an Sensoren (40), wobei jeder Sensor (40) einen Einstellbereich (21) zur Kommunikation damit aufweist.

4. Getränkezubereitungsvorrichtung (10) nach Anspruch 3, **dadurch gekennzeichnet, dass** der Einstellbereich (21) ein stufenweises Einstellelement (22) zum Auswählen eines einer Mehrzahl an Sensoren (40) basierend auf der Menge des zuzubereitenden Getränkes aufweist.

5. Getränkezubereitungsvorrichtung (10) nach Anspruch 4, **dadurch gekennzeichnet, dass** das Einstellelement (22) und der Einstellbereich (21) an einem Handgriff (20) angeordnet sind, so dass der Nutzer eine Auswahl treffen kann.

6. Getränkezubereitungsvorrichtung (10) nach irgendeinem der vorhergehenden Ansprüche, **dadurch gekennzeichnet, dass** die Steuerschaltung, die dazu angeordnet ist, eine Änderung des Widerstands des flüssigen Gemisches (33) mit dem Temperaturanstieg zu messen, eine Anzahl von Betriebsarten aufweist, die verschiedene Widerstandswerte in Abhängigkeit von der Art des zuzubereitenden Getränkes aufweisen.

7. Getränkezubereitungsvorrichtung (10) nach Anspruch 6, **dadurch gekennzeichnet, dass** die Getränkezubereitungsvorrichtung (10) eine Anzahl von Knöpfen aufweist, die es ermöglichen, die Betriebsart in Abhängigkeit von dem zuzubereitenden Getränk zu wählen.

8. Getränkezubereitungsvorrichtung (10) nach irgendeinem der vorhergehenden Ansprüche, **dadurch gekennzeichnet, dass** der Handgriff (20) einen unteren Handgriffabschnitt (23) aufweist, der dazu angeordnet ist, eine Anzahl von Sensoren (40) zu bedecken, die an einer seitlichen Wand (31) durch eine äußere Wand des Reservoirs (30) angeordnet sind, und der dazu angeordnet ist, sich im Wesentlichen parallel zu einer Längsachse (x) des Reservoirs zu erstrecken.

9. Getränkezubereitungsvorrichtung (10) nach irgendeinem der vorhergehenden Ansprüche, **dadurch gekennzeichnet, dass** die Erwärmungsanordnung eine obere Erwärmungsplatte (51) aufweist, die dazu angeordnet ist, mit dem zu erwärmenden flüssigen Gemisch (33) in Berührung zu kommen, und eine Erwärmungsanordnungs-Seitenwand (52), die die obere Erwärmungsplatte (51) umgibt.

10. Getränkezubereitungsvorrichtung (10) nach irgendeinem der vorhergehenden Ansprüche, **gekennzeichnet dadurch, dass** sie eine Steuerschaltung aufweist, die geeignet ist, auf vollkommen automatische Weise zu arbeiten, bei der alle der Sensoren (40) gleichzeitig arbeiten, so dass der Nutzer nicht eine weitere Auswahl treffen muss, und zu der Messungen durch den Erdverbindungsbereich (37) oder das leitfähige Element übertragen werden, zusätzlich zu solchen zwischen den Sensoren (40).

11. Getränkezubereitungsvorrichtung (10) nach irgendeinem der vorhergehenden Ansprüche, **dadurch gekennzeichnet, dass** die Getränkezubereitungsvorrichtung (10) eine Basisanordnung (70) aufweist, mit der sie über ein Verbindungsglied (65) verbunden und über die sie mit der erforderlichen Energie versorgt wird.

12. Getränkezubereitungsvorrichtung (10) nach den Ansprüchen 1 bis 10, **dadurch gekennzeichnet, dass** das Reservoir (30) einen Hauptkörper (60), der eine Getränkezubereitungskammer (64), in dem es platziert werden kann, ein Wasserreservoir (32) zum Einführen von Wasser (63) darin und das mit dem Hauptkörper (60) verknüpft ist, und eine Pumpe aufweist, die im Gebrauch das Wasser (63) in das Kochvolumen (38) überträgt.

13. Getränkezubereitungsvorrichtung (10) nach Anspruch 12, **gekennzeichnet dadurch, dass** sie eine Mehrzahl an Einstellknöpfen (61) an dem Hauptkörper (60) aufweist, die zum Auswählen geeignet ist, welcher Sensor (40) in Abhängigkeit von der gewünschten Anzahl von Personen zu betreiben ist.

14. Getränkezubereitungsvorrichtung (10) nach Anspruch 12, **dadurch gekennzeichnet, dass** die Erwärmungsanordnung (50) außerhalb des Reservoirs (30) positioniert ist, derart, dass sie sich auf dem Boden der Getränkezubereitungskammer (64) befindet und einen Einstellbereich (21) an dem Handgriff (20) aufweist, der ein stufenweises Einstellelement (23) umfasst, das es ermöglicht, einen gewünschten einer Mehrzahl von Sensoren (40) auszuwählen.

15. Getränkezubereitungsvorrichtung (10) nach Anspruch 12, **dadurch gekennzeichnet, dass** sie eine Steuerschaltung aufweist, die geeignet ist, in vollkommen automatischer Weise zu arbeiten, bei der alle der Sensoren (40) gleichzeitig arbeiten, so dass der Nutzer nicht eine weitere Auswahl treffen muss, und zu der Messungen durch den Erdverbindungsbereich (37) oder das leitfähige Element übertragen werden, zusätzlich zu solchen zwischen den Sensoren (40).

## Revendications

1. - Dispositif de préparation de boissons (10) comprenant : un réservoir (30) et une poignée (20) permettant à un utilisateur de tenir le réservoir (30) ;
un volume de préparation (38) entouré et défini par une paroi latérale (31) du réservoir (30) et adapté à une introduction, à l'intérieur de celui-ci, d'un mélange liquide (33) destiné à former la boisson à préparer ;
un ensemble chauffant (50) pour chauffer le réservoir (30) et le mélange liquide (33), en utilisation ;
un circuit de commande pour commander l'ensemble chauffant (50) ; et
au moins un capteur (40) destiné à être utilisé dans la régulation de température, le capteur étant associé au circuit de commande,
**caractérisé par le fait que** ledit dispositif de préparation de boissons (10) comprend en outre :
au moins un capteur (40) façonné sous la forme d'une broche conductrice (41) pouvant être mise en contact avec le mélange liquide (33), ledit capteur étant disposé dans le réservoir (30) ;
une zone de mise à la terre (37), dont une ligne de terre est reliée à l'ensemble chauffant (50) à des fins de sécurité, et qui est en communication avec le circuit de commande, ou un élément conducteur positionné d'une manière telle qu'il est en contact avec le mélange liquide (33) dans le réservoir (30), en utilisation, et qui est en communication avec le circuit de commande ;
le circuit de commande étant apte à mesurer un changement dans la résistance du mélange liquide (33) au moyen d'au moins un capteur (40) à travers la zone de mise à la terre (37), avec laquelle il est en communication afin de mesurer un changement dans la température du mélange liquide, ou à travers l'élément conducteur, et **par le fait que**
ledit circuit de commande est configuré de telle sorte qu'en utilisation, il calcule une valeur de température correspondante par l'intermédiaire d'un algorithme prédéfini selon la valeur de résistance mesurée du mélange liquide (33), et coupe une alimentation délivrée à l'ensemble chauffant (50) ou l'arrête, partiellement, lorsque la valeur de température souhaitée est atteinte.

2. - Dispositif de préparation de boissons (10) selon la revendication 1, **caractérisé par le fait que** ledit capteur (40) comprend une broche conductrice (41) avec une zone de contact (43) destinée à entrer en contact avec le circuit de commande et située à l'extérieur du réservoir (30), et un élément isolant (42) fait d'un matériau isolant qui entoure la broche conductrice (41), si un réservoir conducteur (30) est utilisé, et est en contact avec la paroi latérale (31).

3. - Dispositif de préparation de boissons (10) selon l'une des revendications 1 ou 2, **caractérisé par** une pluralité de capteurs (40), chaque capteur (40) comprenant une zone d'ajustement (21) pour une communication dans celle-ci.

4. - Dispositif de préparation de boissons (10) selon la revendication 3, **caractérisé par le fait que** ladite zone d'ajustement (21) comprend un élément d'ajustement gradué (22) pour sélectionner l'un d'une pluralité de capteurs (40) sur la base de la quantité de la boisson à préparer.

5. - Dispositif de préparation de boissons (10) selon la revendication 4, **caractérisé par le fait que** ledit élément d'ajustement (22) et ladite zone d'ajustement (21) sont disposés sur une poignée (20) de telle sorte que l'utilisateur peut effectuer une sélection.

6. - Dispositif de préparation de boissons (10) selon l'une quelconque des revendications précédentes, **caractérisé par le fait que** le circuit de commande qui est conçu pour mesurer un changement dans la résistance du mélange liquide (33) avec l'augmentation de température comprend un nombre de modes de fonctionnement ayant des valeurs de résistance différentes selon le type de la boisson à préparer.

7. - Dispositif de préparation de boissons (10) selon la revendication 6, **caractérisé par le fait que** ledit dispositif de préparation de boissons (10) comprend un nombre de boutons qui permettent de sélectionner le mode de fonctionnement selon la boisson à préparer.

8. - Dispositif de préparation de boissons (10) selon l'une quelconque des revendications précédentes, **caractérisé par le fait que** ladite poignée (20) a une section de poignée inférieure (23) qui est conçue pour couvrir un nombre de capteurs (40) disposés sur une paroi latérale (31) à travers une paroi extérieure du réservoir (30) et qui est conçue pour s'étendre sensiblement parallèlement à un axe longitudinal (x) du réservoir.

9. - Dispositif de préparation de boissons (10) selon l'une quelconque des revendications précédentes, **caractérisé par le fait que** ledit ensemble chauffant comprend une plaque chauffante supérieure (51) conçue pour entrer en contact avec le mélange liquide (33) à chauffer et une paroi latérale (52) d'ensemble chauffant entourant la plaque chauffante supérieure (51).

10. - Dispositif de préparation de boissons (10) selon l'une quelconque des revendications précédentes, **caractérisé par le fait qu'**il comprend un circuit de commande qui est apte à fonctionner d'une manière entièrement automatique, sur lequel tous les capteurs (40) fonctionnent simultanément de telle sorte que l'utilisateur n'est pas tenu d'effectuer une autre sélection, et auquel des mesures sont transmises par l'intermédiaire de la zone de mise à la terre (37) ou de l'élément conducteur, en plus de celles entre les capteurs (40).

11. - Dispositif de préparation de boissons (10) selon l'une quelconque des revendications précédentes, **caractérisé par le fait que** ledit dispositif de préparation de boissons (10) comprend un ensemble base (70) auquel il est relié par l'intermédiaire d'un connecteur (65) et par l'intermédiaire duquel il est alimenté en l'énergie nécessaire.

12. - Dispositif de préparation de boissons (10) selon l'une quelconque des revendications 1 à 10, **caractérisé par le fait que** ledit réservoir (30) comprend un corps principal (60) ayant une chambre de préparation de boissons (64) dans laquelle il peut être placé, un réservoir d'eau (62) pour introduire de l'eau (63) dans celui-ci et qui est associé au corps principal (60), et une pompe transférant l'eau (63) dans le volume de préparation (38), en utilisation.

13. - Dispositif de préparation de boissons (10) selon la revendication 12, **caractérisé par le fait qu'**il comprend une pluralité de boutons d'ajustement (61) sur le corps principal (60) qui sont adaptés à une sélection de quel capteur (40) doit être actionné selon le nombre de personnes souhaité.

14. - Dispositif de préparation de boissons (10) selon la revendication 12, **caractérisé par le fait que** ledit ensemble chauffant (50) est positionné à l'extérieur du réservoir (30) de telle sorte qu'il est situé sur le fond de la chambre de préparation de boissons (64) et comprend une zone d'ajustement (21) sur la poignée (20) comprenant un élément de réglage gradué (22) qui permet de sélectionner un capteur souhaité parmi une pluralité de capteurs (40).

15. - Dispositif de préparation de boissons (10) selon la revendication 12, **caractérisé par le fait qu'**il comprend un circuit de commande qui est apte à fonctionner d'une manière entièrement automatique, sur lequel tous les capteurs (40) fonctionnent simultanément de telle sorte que l'utilisateur n'est pas tenu d'effectuer une autre sélection, et auquel des mesures sont transmises par l'intermédiaire de la zone de mise à la terre (37) ou de l'élément conducteur, en plus de celles entre les capteurs (40).
